# EUROPÄISCHE PATENTSCHRIFT

(11) **EP 3 759 511 B1**
(45) Veröffentlichungstag und Bekanntmachung des Hinweises auf die Patenterteilung: **21.08.2024**
(21) Anmeldenummer: 19700498.9
(22) Anmeldetag: 12.01.2019
(51) Int. Cl.: G01S 13/931, G01S 7/03, G01S 13/87

(54) **RADARSENSORSYSTEM UND VERFAHREN ZUM BETREIBEN EINES RADARSENSORSYSTEMS**
RADAR SENSOR SYSTEM AND METHOD FOR OPERATING A RADAR SENSOR SYSTEM
SYSTÈME DE DÉTECTION RADAR ET PROCÉDÉ DE FONCTIONNEMENT D'UN SYSTÈME DE DÉTECTION RADAR

(30) Priorität: 01.03.2018 DE 102018203117
(43) Veröffentlichungstag der Anmeldung: 06.01.2021
(73) Patentinhaber: Robert Bosch GmbH, 70442 Stuttgart (DE)
(72) Erfinder: MAYER, Marcel, 89173 Lonsee (DE); BAUR, Klaus, 88487 Mietingen (DE); SCHOOR, Michael, 70195 Stuttgart (DE)
(86) Internationale Anmeldenummer: PCT/EP2019/050728
(87) Internationale Veröffentlichungsnummer: WO 2019/166146

(56) Entgegenhaltungen:
- EP-A1- 2 881 752
- DE-A1- 102012 201 990
- DE-A1- 102015 218 542

## Beschreibung

Die Erfindung betrifft ein Radarsensorsystem. Die Erfindung betrifft ferner ein Verfahren zum Betreiben eines Radarsensorsystems.

### Stand der Technik

Die Offenlegungsschrift DE 10 2015 218 542 A1 offenbart einen integrierten Hochfrequenzschaltkreis.

Die Offenlegungsschrift EP 2 881 752 A1 offenbart ein Radarsystem.

Die Offenlegungsschrift DE 10 2012 201 990 A1 offenbart einen Radarsensor mit Überwachungsschaltung.

Aktuell befindet sich der Markt der Fahrerassistenzsysteme im Umbruch. Während in den letzten Jahren hauptsächlich preisgünstige Sensorik im Vordergrund stand, zeigt sich aktuell der Trend zum hochautonomen Fahren mit wesentlich höheren Ansprüchen an die Sensorik. Es werden bei Fahrzeugen mit einem hohem Grad an Fahrerassistenzfunktionen oder automatisierten Fahrfunktion zunehmend mehr Sensoren zum Steuern und Regeln der Funktionen verbaut. Die in die Fahrzeuge eingebauten Sensoren können beispielsweise RadarSensoren oder LIDAR-Sensoren sein und müssen eine möglichst hohe Genauigkeit aufweisen. Durch ein Verwenden von präzisen Sensoren kann die Funktionssicherheit und die Zuverlässigkeit der autonomen oder teilautonomen Fahrfunktionen gewährleistet werden.

Bei Fahrzeugen mit autonomen Fahrfunktionen oder automatisierten Fahrassistenzfunktionen führen Fehler, insbesondere E/E-Fehler gemäß der ISO26262, zur Abschaltung des jeweiligen Radarsensors bzw. der Buskommunikation. Bei Radarsensoren mit einer hohen Leistungsfähigkeit, welche viele Antennen, HF-Kanäle und Speicher aufweisen, steigt die Wahrscheinlichkeit für einen Ausfall stark an. Nach ISO26262 wird diese Wahrscheinlichkeit in FIT (sogenannte Failure in Time, 10⁻⁹ / h) bestimmt. Eine Komponente kann somit gemäß ASIL-B bzw. ASIL-C maximal 100 FIT aufweisen, bevor sie deaktiviert wird. Es wird dabei der sichere Zustand der jeweiligen Komponente nicht berücksichtigt. Wenn beispielsweise ein Quarz-Oszillator 30 FIT (SN 29500-4) hat, dann nimmt dieser schon alleine 30% der zur Verfügung stehenden FIT Raten des Radarsensors ein.

### Offenbarung der Erfindung

Es ist eine Aufgabe der vorliegenden Erfindung, ein Radarsensorsystem mit verbesserter Betriebscharakteristik bereitzustellen.

Gemäß einem ersten Aspekt wird die Aufgabe gelöst mit einem Radarsensorsystem, mit den Merkmalen des unabhängigen Vorrichtungs-Anspruchs.

Auf diese Weise wird die Funktion des Synchronisations-Masters für die Betriebsfrequenz von allen HF-Bauelementen übernommen, wodurch eine verbesserte Betriebscharakteristik des Radarsensorsystems unterstützt ist. Dadurch kann z.B. vorteilhaft eine Notlauffunktionalität des Radarsensorsystems und/oder thermische Driften zwischen mehreren HF-Bauelementen reduziert werden.

Gemäß einem zweiten Aspekt wird die Aufgabe gelöst mit einem Verfahren zum Betreiben eines Radarsensorsystems, mit den Merkmalen des unabhängigen Verfahrens-Anspruchs.

Eine weitere erfindungsgemäße Weiterbildung des Radarsensorsystems sieht vor, dass der Synchronisations-Master nach einem Temperaturkriterium aus den HF-Bauelementen auswählbar ist. Aufgrund der Tatsache, dass der Synchronisations-Master erhöhte elektrische Leistung aufnimmt und thermische Energie erzeugt, kann dadurch eine thermische Belastung des Radarsensorsystems vorteilhaft geichmäßiger sein.

Eine erfindungsgemäße Weiterbildung des Radarsensorsystems ist dadurch gekennzeichnet, dass der Synchronisations-Master derart auswählbar ist, dass Temperaturunterschiede zwischen den HF-Bauelementen in einem definierten Ausmaß gleich gehalten werden.

Eine weitere erfindungsgemäße Weiterbildung des Radarsensorsystems zeichnet sich dadurch aus, dass der Synchronisations-Master derart auswählbar ist, dass als Synchronisations-Master das jeweils kälteste HF-Bauelement auswählbar ist.

Mit den genannten Maßnahmen treten Temperatureffekte vorteilhaft verringert auf, wodurch z.B. eine Winkelschätzcharakteristik des Radarsensorsystems verbessert sein kann.

Eine weitere erfindungsgemäße Weiterbildung des Radarsensorsystems zeichnet sich dadurch aus, dass der Synchronisations-Master derart auswählbar ist, dass eine definierte Phasendifferenz zwischen dem Synchronisations-Master und Synchronisations-Slaves bereitstellbar ist. Vorteilhaft ist dadurch eine gleichmäßige Sensiercharakteristik des Radarsensorsystems unterstützt.

Eine weitere nicht zur von der Erfindung umfasste Weiterbildung des Radarsensorsystems ist dadurch gekennzeichnet, dass der Synchronisations-Master nach einem definierten Betriebsmuster aus den HF-Bauelementen bereitstellbar ist. Beispielsweise kann dadurch ein Betreiben des Synchronisations-Masters im Uhrzeigersinn oder gegen der Uhrzeigersinn der geometrischen Anordnung der HF-Bauelemente erfolgen, wodurch vorteilhaft eine gleichmäßige Belastung der HF-Bauelemente unterstützt ist.

Im Folgenden werden anhand von stark vereinfachten schematischen Darstellungen bevorzugte Ausführungsbeispiele der Erfindung näher erläutert. Dabei zeigen:
- Fig. 1: eine schematische Darstellung eines vorgeschlagenen Radarsensorsystems;
- Fig. 2: eine etwas detailliertere schematische Darstellung eines vorgeschlagenen Radarsensorsystems; und
- Fig. 3: ein prinzipielles Ablaufdiagramm eines vorgeschlagenen Verfahrens zum Betreiben eines Radarsensorsystems.

In den Figuren weisen dieselben konstruktiven Elemente jeweils dieselben Bezugsziffern auf.

Aktuelle Radarsensoren weisen üblicherweise viele HF-Kanäle zum Erzeugen und zum Empfangen von Radarwellen auf. Dabei können im Normalbetrieb alle HF-Bausteine gleichzeitig im Betrieb sein. Derartige Radarsensoren können bei einer symmetrischen Ausgestaltung in mehrere Teilsensoren unterteilt werden. Jeder Teilsensor kann somit einen entsprechenden Anteil an HF-Bausteinen bzw. HF-Kanälen des Radarsensors aufweisen. Somit kann beispielsweise ein Teilsensor des Radarsensors in einem möglichen Notbetrieb eine autonome Fahrt eines Fahrzeugs bei einer eingeschränkten Geschwindigkeit ermöglichen. Dies kann auch dann realisiert werden, wenn Komponenten von anderen Teilsensoren nicht mehr funktionsfähig sind.

Der Aufbau des Radarsensorsystems kann beispielsweise aus bekannten kostengünstigen Basiskomponenten bestehen. Durch eine Parallelisierung mehrere Bauelemente vom gleichen Typ lässt sich eine Verbesserung der Leistung und der Genauigkeit des Radarsensorsystems realisieren. Darüber hinaus kann durch die Verwendung mehrerer gleichartiger Bauelemente eine Redundanz zum Bereitstellen einer zuverlässigen Funktion der Anordnung ermöglicht sein. Hierdurch kann technisch einfach ein Notbetrieb des Radarsensorsystems umgesetzt werden. Dazu muss aber neben den HF-Komponenten und den Mikrocontrollern auch eine Redundanz bei der Takterzeugung vorhanden sein. Die HF-Komponenten können beispielsweise in Form von MMICs (engl. monolithic microwave integrated circuit) aufgebaute Antennensteuerungen oder Verstärker sein.

Dadurch, dass alle HF-Komponenten von einem gemeinsamen Taktgeber mit einer Nutz- bzw. Basisfrequenz gespeist werden, weist das Radarsensorsystem eine hohe Kohärenz auf. Insbesondere können die unterschiedlichen HF-Bauelemente mit identischer Betriebsfrequenz betrieben werden, wodurch eine redundante und kohärente Taktversorgung von mehreren HF-Bauelementen ermöglicht wird.

Vorzugsweis kann zumindest ein Teil der im Radarsensorsystem verwendeten HF-Bauelemente mit einem Takt bzw. einer Nutzfrequenz versorgt werden. Im Normalbetrieb können alle HF-Bauelemente bzw. Antennensteuerungen des Radarsensorsystems mit demselben Takt von mindestens einem Taktgeber versorgt und somit alle Daten miteinander verrechnet werden.

In einem Normalbetrieb des Radarsensorsystems erfolgt durch mindestens einen Taktgeber eine gleichzeitige Taktversorgung aller Antennensteuerungen bzw. HF-Bauelemente. Durch die Taktversorgung aus einer Quelle kann eine hohe Kohärenz realisiert werden. Alternativ oder zusätzlich kann die Taktversorgung aus mehreren parallel betriebenen Taktgebern aufgebaut sein. Weist ein Taktgeber beispielsweise einen Defekt auf, dann kann über die Steuereinheit mindestens ein weiterer Taktgeber zum Erzeugen einer Frequenz aktiviert bzw. zugeschaltet werden.

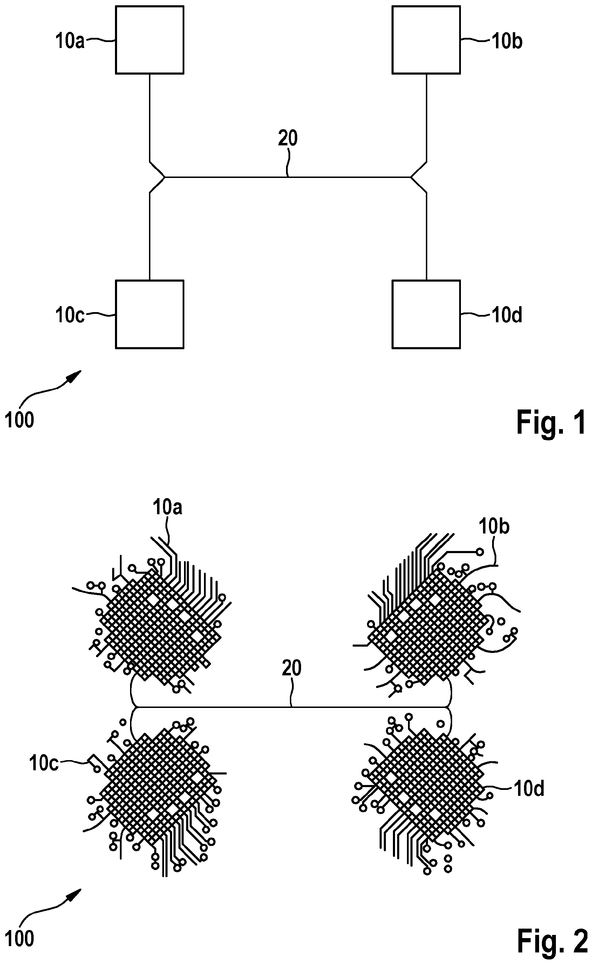

Fig. 1 zeigt eine schematische Darstellung eines vorgeschlagenen Radarsensorsystems 100. Das Radarsensorsystem 100 weist vier HF-Bauelemente 10a... 10d auf, die als MMICs ausgebildet sind. Dabei ist die Anzahl vier lediglich beispielhaft, das vorgeschlagene Radarsensorsystem 100 kann auch weniger oder mehr als vier HF-Bauelemente aufweisen. Ferner erkennbar ist ein Synchronisationsnetzwerk 20, an das sämtliche HF-Bauelemente 10a... 10d angeschlossen sind und das zum Synchronisieren der Betriebsfrequenz aller HF-Bauelemente 10a... 10d verwendet wird, wobei beim Synchronisiervorgang ein HF-Bauelement 10a... 10d als Synchronisier-Masterbauelement und die anderen als Slave-HF-Bauelemente fungieren. Geometrische Längen von Leitungen des Synchronisationsnetzwerks 20 sind im Vergleich zu einer Radarauflösung des Radarsensorsystems 100 vorteilhaft kurz, wodurch eine Laufzeit von Signalen innerhalb des Synchronisationsnetzwerks 20 an die Radarauflösung angepasst ist.

Ferner weist das Radarsensorsystem 100 Antennensteuerungen der HF-Bauelemente 10a... 10d auf. Der Einfachheit halber sind weitere Komponenten der HF-Bauelemente 10a... 10d, die zum Aussenden und zum Empfangen von Radarwellen erforderlich sind, wie beispielsweise Antennen, Verstärker, Oszillatoren, usw. in den Figuren nicht dargestellt.

Vorgeschlagen wird, dass das Synchronisier-Masterbauelement während der Betriebszeit des Radarsensorsystems 100 nicht immer dasselbe ist, sondern dass die Funktion des Synchronisier-Masterbauelements über die Betriebszeit des Radarsensorsystems 100 nach wenigstens einem definierten Kriterium von allen HF-Bauelementen 10a... 10d übernommen wird.

Üblicherweise wird in einem Radarsensorsystem einem Bauteil die Rolle des Masters, der die Hochfrequenzerzeugung übernimmt, zugeordnet und die anderen HF-Bauelemente werden von diesem mit dem HF- Synchronisationssignal versorgt. Das HF-Synchronisationssignal ist erforderlich, um eine hohe Kohärenz der HF-Bauelemente 10a... 10d bereit zu stellen, um eine hohe Winkelauflösung des Radarsensorsystems 100 zu ermöglichen. Dafür werden im Stand der Technik spezialisierte Bausteine für die Erzeugung der Hochfrequenz und für die weitere Signalverarbeitung eingesetzt.

Jedoch zeigt sich bei immer höheren Kosten für die HF-Bausteinentwicklung, beispielsweise bei höheren Maskenkosten für geringere Knotengrößen, dass die Verwendung von mehreren Baustellensteinen desselben Typs Kostenvorteile bringen kann, obwohl die eigentliche Siliziumfläche größer ist. Auf diese Weise ergibt sich mit der Erfindung die vorteilhafte Möglichkeit, ein kostengünstiges und redundantes Radarsensorsystem zu realisieren.

Mit der Erfindung wird vorgeschlagen, die Rolle des Masters von einem HF-Bauelement rollierend auf alle andere zu übertragen. Vorteilhaft ergibt dies günstige Betriebseigenschaften für das Radarsensorsystem 100, beispielsweise im Bereich Thermomanagement.

Fig. 2 zeigt die Anordnung des Radarsensorsystems 100 von Fig. 1 in einem höheren Detaillierungsgrad, wobei erkennbar ist, dass die HF-Bauelemente 10a... 10d gegeneinander in einem definierten Winkel angeordnet sind, um auf diese Weise eine kürzere Länge von elektrischen Leitungen des Synchronisationsnetzwerks 20 zu ermöglichen, wodurch eine Detektionsgenauigkeit des Radarsensorsystems 100 optimiert werden kann.

Ein Masterbaustein übernimmt im Normalbetrieb des Radarsensorsystems 100 mehrere der folgend genannten Aufgaben:
- Frequenzerzeugung mittels PLL (z.B. 77 GHz) und eventuell eine Takterzeugung (z.B. 50 MHz)
- Ausgabe und Verstärkung des HF-Synchronisationssignals
- Teilweise die Bereitstellung des Sendesignals
- Mischung ins Basisband
- Eventuell AD-Wandlung und Ausgabe der Digitalsignale

Die beiden erstgenannten Aufgaben werden in der Regel ausschließlich vom Master-HF-Bauelement übernommen, wobei die drei letztgenannten Aufgaben von allen beteiligten HF-Bauelementen 10a... 10d des Radarsensorsystems 100 übernommen werden.

Die erhöhte Verlustleistung des Master-Bauelements führt im Bereich der oberen Grenztemperatur (Hochtemperatur HT) dazu, dass das Master-Bauelement 10a... 10d früher abgeschaltet werden muss (oder in der Performance degradiert) als die Slave-Bausteine 10a... 10d und dadurch die Verfügbarkeit verringert wird.

Zusätzlich degradiert dieses Bauelement stärker über die Lebensdauer, weil es länger in der Nähe der HT-Grenztemperatur arbeitet. Daher wird mit der Erfindung vorgeschlagen, die Temperatur der einzelnen HF-Bauelemente (z.B. mittels eines Temperatursensors) zu ermitteln und die Synchronisations-Masterrolle dem HF-Bauelement 10a... 10d mit der niedrigsten Temperatur zuzuweisen.

Wenn nämlich immer ein und dasselbe HF-Bauelement 10a... 10d die MasterRolle innehat und damit wärmer als die Slave-Bauelemente ist, dann führt seine erhöhte Temperatur gegenüber den Slave-Bauelementen zu potentiellen Abweichungen der Phase im Basisband. So hat beispielsweise das Master-Bauelement im Basisband eine um 30° versetzte Phase gegenüber den Slave-Bauelementen, wobei diese Abweichung zu Fehlern in der Winkelschätzung führt und deshalb möglichst nicht auftreten sollte. Mit dem vorgeschlagenen Rollieren des Master-Bauelements 10a... 10d während des Betriebs des Radarsensorsystems 100 ist dies vorteilhaft unterstützt.

Neben der Phase weist auch die Amplitude eine Drift über der Temperatur auf, sodass Temperaturunterschiede zwischen den HF-Bauelementen 10a... 10d vermieden werden sollten.

Für die Funktion der rollierenden Masterfunktionalität können außerhalb des Schutzumfangs der Ansprüche mehrere definierte Auswahlkriterien verwendet werden:
- Wechseln der Master-Funktionalität nach einem stochastischen Zufallsprinzip
- Übernahme der Master-Funktionalität von einer "Vorzugsseite" des Radarsensorsystems 100, wenn beispielsweise auch der 50 MHz Takt vom Master-HF-Bauelement erzeugt wird und eine Notlauffunktionalität vorgesehen ist
- Wechseln der Master-Funktionalität nach einem vorgegebenen Muster, z.B. im oder gegen den Uhrzeigersinn der geometrischen Anordnung der HF-Bauelemente 10a... 10d

Möglich sind selbstverständlich auch noch weitere, vorgehend nicht näher erläuterte Kriterien zum rollierenden Betreiben eines HF-Bauelements 10a... 10d als Master-HF-Bauelement des Radarsensorsystems 100.

Vorteilhaft kann das vorgeschlagene Verfahren nicht nur in einem Radarsensorsystem, sondern auch in jeglichem Produkt mit mehreren HF-Bauelementen eingesetzt werden. Vorzugsweise wird das vorgeschlagene Radarsensorsystem im Automobilbereich eingesetzt.

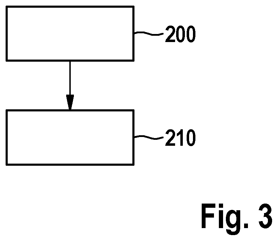

Fig. 3 zeigt ein prinzipielles Ablaufdiagramm eines Verfahrens zum Betreiben eines Radarsensorsystems.

In einem Schritt 200 wird ein Senden und Empfangen von Radarwellen mittels einer definierten Anzahl von HF-Bauelementen 10a... 10d mittels jeweils mindestens einer Antenne durchgeführt.

In einem Schritt 210 wird ein Synchronisieren einer Betriebsfrequenz der HF-Bauelemente 10a... 10d mittels eines Synchronisationsnetzwerks 20 durchgeführt, das mit der definierte Anzahl von HF-Bauelementen 10a... 10d verbunden ist, wobei eine Funktion eines Synchronisations-Masters nach wenigstens einem definierten Kriterium von allen HF-Bauelementen 10a...10d übernommen wird.

Vorteilhaft kann das vorgeschlagene Verfahren als eine Software implementiert werden, welche in einem Steuergerät (nicht dargestellt) des Radarsensorsystems 100 abläuft. Vorteilhaft ist auf diese Weise eine einfache Änderbarkeit des Verfahrens unterstützt.

## Patentansprüche

1. Radarsensorsystem (100) aufweisend:
- eine definierte Anzahl von HF-Bauelementen (10a... 10d);
- wobei jedes der HF-Bauelemente (10a... 10d) jeweils wenigstens eine Antenne zum Senden und/oder Empfangen von Radarwellen und wenigstens eine Antennensteuerung zum Betreiben der wenigstens einen Antenne aufweist; und
- ein Synchronisationsnetzwerk (20), das mit allen HF-Bauelementen (10a... 10d) verbunden ist und über das eine Betriebsfrequenz aller HF-Bauelemente (10a... 10d) synchronisiert ist; wobei geometrische Längen von Leitungen des Synchronisationsnetzwerks (20) im Vergleich zu einer Radarauflösung des Radarsensorsystems (100) kurz sind, wodurch eine Laufzeit von Signalen innerhalb des Synchronisationsnetzwerks (20) an die Radarauflösung angepasst ist; wobei
- ein Synchronisations-Master nach wenigstens einem definierten Kriterium von allen HF-Bauelementen (10a... 10d) bereitgestellt ist, wobei während einer Betriebszeit des Radarsensorsystems (100) der Synchronisations-Master nicht immer derselbe ist, sodass eine rollierende Masterfunktionalität bereitgestellt ist und sodass eines der HF-Bauelemente (10a...10d) als Master-HF-Bauelement des Radarsensorsystems (100) rollierend betrieben ist,
- wobei der Synchronisations-Master nach einem Temperaturkriterium aus den HF-Bauelementen (10a... 10d) ausgewählt ist,
- und derart ausgewählt ist, dass eine definierte Phasendifferenz zwischen dem Synchronisations-Master und Synchronisations-Slaves bereitgestellt ist,
- wobei der Synchronisations-Master derart ausgewählt ist, dass Temperaturunterschiede zwischen den HF-Bauelementen (10a... 10d) in einem definierten Ausmaß gleich gehalten werden
- oder der Synchronisations-Master derart ausgewählt ist, dass als Synchronisations-Master das jeweils kälteste HF-Bauelement (10a... 10d) ausgewählt ist.

2. Verfahren zum Betreiben eines Radarsensorsystems (100), aufweisend die Schritte:
- Senden und Empfangen von Radarwellen mittels einer definierten Anzahl von HF-Bauelementen (10a...10d) mittels jeweils mindestens einer Antenne; und
- Synchronisieren einer Betriebsfrequenz der HF-Bauelemente (10a... 10d) mittels eines Synchronisationsnetzwerks (20), das mit der definierten Anzahl von HF-Bauelementen (10a... 10d) verbunden ist; wobei geometrische Längen von Leitungen des Synchronisationsnetzwerks (20) im Vergleich zu einer Radarauflösung des Radarsensorsystems (100) kurz sind, wodurch eine Laufzeit von Signalen innerhalb des Synchronisationsnetzwerks (20) an die Radarauflösung angepasst ist; wobei
- eine Funktion eines Synchronisations-Masters nach wenigstens einem definierten Kriterium von allen HF-Bauelementen (10a...10d) übernommen wird; und
- wobei während einer Betriebszeit des Radarsensorsystems (100) der Synchronisations-Master nicht immer derselbe ist, sodass eine rollierende Masterfunktionalität bereitgestellt ist und sodass eines der HF-Bauelemente (10a...10d) als Master-HF-Bauelement des Radarsensorsystems (100) rollierend betrieben wird,
- wobei der Synchronisations-Master nach einem Temperaturkriterium aus den HF-Bauelementen (10a... 10d) ausgewählt ist,
- und derart ausgewählt ist, dass eine definierte Phasendifferenz zwischen dem Synchronisations-Master und Synchronisations-Slaves bereitgestellt ist,
- wobei der Synchronisations-Master derart ausgewählt ist, dass Temperaturunterschiede zwischen den HF-Bauelementen (10a... 10d) in einem definierten Ausmaß gleich gehalten werden
- oder der Synchronisations-Master derart ausgewählt ist, dass als Synchronisations-Master das jeweils kälteste HF-Bauelement (10a... 10d) ausgewählt ist.

## Claims

1. Radar sensor system (100) comprising:
- a defined number of RF components (10a... 10d);
- wherein each of the RF components (10a... 10d) comprises in each case at least one antenna for transmitting and/or receiving radar waves and at least one antenna controller for operating the at least one antenna; and
- a synchronization network (20) that is connected to all the RF components (10a... 10d) and by way of which an operating frequency of all the RF components (10a... 10d) is synchronized; wherein geometric lengths of conductors of the synchronization network (20) are short in comparison with a radar resolution of the radar sensor system (100), as a result of which a propagation time of signals within the synchronization network (20) matches the radar resolution; wherein
- a synchronization master is provided by all the RF components (10a... 10d) according to at least one defined criterion, wherein the synchronization master is not always the same one during an operating time of the radar sensor system (100), with the result that a rolling master functionality is provided and with the result that one of the RF components (10a...10d) is operated as the master RF component of the radar sensor system (100) on a rolling basis,
- wherein the synchronization master is selected from the RF components (10a... 10d) according to a temperature criterion,
- and is selected in such a way that a defined phase difference between the synchronization master and synchronization slaves is provided,
- wherein the synchronization master is selected in such a way that temperature differences between the RF components (10a... 10d) are kept equal to a defined extent
- or the synchronization master is selected in such a way that the coldest RF component (10a... 10d) in each case is selected as the synchronization master.

2. Method for operating a radar sensor system (100), comprising the steps of:
- transmitting and receiving radar waves by means of a defined number of RF components (10a... 10d) by means of in each case at least one antenna; and
- synchronizing an operating frequency of the RF components (10a... 10d) by means of a synchronization network (20) that is connected to the defined number of RF components (10a... 10d); wherein geometric lengths of conductors of the synchronization network (20) are short in comparison with a radar resolution of the radar sensor system (100), as a result of which a propagation time of signals within the synchronization network (20) matches the radar resolution; wherein
- a function of a synchronization master is assumed by all the RF components (10a... 10d) according to at least one defined criterion; and
- wherein the synchronization master is not always the same one during an operating time of the radar sensor system (100), with the result that a rolling master functionality is provided and with the result that one of the RF components (10a...10d) is operated as the master RF component of the radar sensor system (100) on a rolling basis,
- wherein the synchronization master is selected from the RF components (10a... 10d) according to a temperature criterion,
- and is selected in such a way that a defined phase difference between the synchronization master and synchronization slaves is provided,
- wherein the synchronization master is selected in such a way that temperature differences between the RF components (10a... 10d) are kept equal to a defined extent
- or the synchronization master is selected in such a way that the coldest RF component (10a... 10d) in each case is selected as the synchronization master.

## Revendications

1. Système de capteur radar (100), comprenant :
- un nombre défini de composants HF (10a... 10d) ;
- chacun des composants HF (10a... 10d) possédant respectivement au moins une antenne pour l'émission et/ou la réception d'ondes radar et au moins une commande d'antenne destinée à faire fonctionner l'au moins une antenne ; et
- un réseau de synchronisation (20), qui est relié à tous les composants HF (10a...10d) et par le biais duquel une fréquence de fonctionnement de tous les composants HF (10a...10d) est synchronisée ; les longueurs géométriques de lignes du réseau de synchronisation (20) étant courtes par rapport à une résolution radar du système de capteurs radar (100), moyennant quoi un temps de propagation de signaux à l'intérieur du réseau de synchronisation (20) est adapté à la résolution radar ;
- un maître de synchronisation étant mis à disposition par tous les composants HF (10a...10d) conformément à au moins un critère défini, le maître de synchronisation n'étant pas toujours le même pendant une durée de fonctionnement du système de capteurs radar (100), de sorte qu'une fonctionnalité de maître cyclique est mise à disposition et de sorte que l'un des composants HF (10a...10d) fonctionne cycliquement comme composant HF maître du système de capteurs radar (100),
- le maître de synchronisation étant sélectionné parmi les composants HF (10a...10d) d'après un critère de température,
- et étant sélectionné de telle sorte qu'une différence de phases définie est fournie entre le maître de synchronisation et les esclaves de synchronisation,
- le maître de synchronisation étant sélectionné de telle sorte que les différences de température entre les composants HF (10a...10d) soient maintenues égales dans une mesure définie
- ou le maître de synchronisation étant sélectionné de telle sorte que le composant HF (10a...10d) respectivement le plus froid est sélectionné comme maître de synchronisation.

2. Procédé destiné à faire fonctionner un système de capteurs radar (100), comprenant les étapes suivantes :
- émission et réception d'ondes radar au moyen d'un nombre défini de composants HF (10a...10d), respectivement au moyen d'au moins une antenne ; et
- synchronisation d'une fréquence de fonctionnement des composants HF (10a...10d) au moyen d'un réseau de synchronisation (20), qui est relié au nombre défini de composants HF (10a...10d) ; les longueurs géométriques de lignes du réseau de synchronisation (20) étant courtes par rapport à une résolution radar du système de capteurs radar (100), moyennant quoi un temps de propagation de signaux à l'intérieur du réseau de synchronisation (20) est adapté à la résolution radar ;
- une fonction d'un maître de synchronisation étant prise en charge par tous les composants HF (10a...10d) conformément à au moins un critère défini ; et
- le maître de synchronisation n'étant pas toujours le même pendant une durée de fonctionnement du système de capteurs radar (100), de sorte qu'une fonctionnalité de maître cyclique est mise à disposition et de sorte que l'un des composants HF (10a...10d) fonctionne cycliquement comme composant HF maître du système de capteurs radar (100),
- le maître de synchronisation étant sélectionné parmi les composants HF (10a...10d) d'après un critère de température,
- et étant sélectionné de telle sorte qu'une différence de phase définie est fournie entre le maître de synchronisation et les esclaves de synchronisation,
- le maître de synchronisation étant sélectionné de telle sorte que les différences de température entre les composants HF (10a...10d) soient maintenues égales dans une mesure définie
- ou le maître de synchronisation étant sélectionné de telle sorte que le composant HF (10a...10d) respectivement le plus froid est sélectionné comme maître de synchronisation.
